# EUROPÄISCHE PATENTSCHRIFT

(11) **EP 2 395 258 B1**
(45) Veröffentlichungstag und Bekanntmachung des Hinweises auf die Patenterteilung: **24.10.2018**
(21) Anmeldenummer: 11165032.1
(22) Anmeldetag: 06.05.2011
(51) Int. Cl.: F16F 9/05

(54) **Luftfeder-Dämpfer-Modul für Nutzfahrzeuge**
Pneumatic spring damper module for commercial vehicles
Module d'amortissement par ressort à air pour véhicules utilitaires

(30) Priorität: 11.06.2010 DE 102010017336
(43) Veröffentlichungstag der Anmeldung: 14.12.2011
(73) Patentinhaber: ContiTech Luftfedersysteme GmbH, 30165 Hannover (DE)
(72) Erfinder: Stahmer, Reinhard, 30823, Garbsen (DE)
(74) Vertreter: Finger, Karsten

(56) Entgegenhaltungen:
- DE-A1-102004 060 466
- DE-U1- 20 219 883
- US-A- 4 588 171

## Beschreibung

Die Erfindung betrifft ein Luftfeder-Dämpfer-Modul umfassend
- einen Stoßdämpfer mit einem Behälterrohr mit einem vom oberen Ende des Stoßdämpfers beabstandeten, auf dem Behälterrohr fixierten, als Ringflansch ausgebildeten Stützring,
- einem auf dem oberen Ende des Stoßdämpfers angeordneten Abrollkolben, der an seinem dem Stoßdämpfer zugeordneten Ende eine zentrische Öffnung aufweist und mit der Öffnung über das obere Ende des Stoßdämpfers gestülpt ist und sich über den Ringflansch auf dem Behälterrohr des Stoßdämpfers abstützt,
- einem auf dem Abrollkolben angeordneten und fixierten Luftfederbalg und
- einem im Inneren des Luftfederbalgs angeordneten Anschlagpuffer aus elastomerem Werkstoff.

Derartige Luftfeder-Dämpfer-Module sind an sich bekannt und in Nutzfahrzeugen vorwiegend an der Vorderachse einsetzbar. In der DE 10 2004 060 466 A1 ist ein derartiges System offenbart.

Der Kolben dieser Lösung ist eine Metallkonstruktion, die zwar eine hohe Stabilität aufweist, aber werkstoffbedingt relativ schwer ist. Außerdem ist ein galvanischer Überzug als Korrosionsschutz erforderlich.

Um diesen Nachteilen zu begegnen, sind Lösungen bekannt, bei denen der Abrollkolben aus Kunststoff aufgebaut ist. Diese Systeme sind jedoch bisher nur für PKW im Einsatz, dabei ist der Kolben meist als oben offener Napf ausgebildet, an dem der Abrollbalg, der als Schlauchbalg ausgebildet ist, mittels Spannring fest und unlösbar befestigt ist. Diese Lösung hat den Nachteil, dass für den Fall einer Durchfederung des Fahrzeugs eine separate Abstützung vorgesehen werden muss. Eine Abpufferung mittels elastomerem Puffer innerhalb der Luftfeder ist aufgrund des Kolbenprinzips meist nicht realisierbar, da eine Pufferabstützung aus Platzgründen meist nicht vorgesehen werden kann.

Eine derartige Lösung ist in der DE 88 13 045 U1 oder der DE 10 32 0501 A1 gezeigt.

Der Erfindung liegt die Aufgabe zugrunde, die bekannten Luftfeder-Dämpfer-Module so zu verbessern, dass auch für Nutzfahrzeuge Luftfeder-Dämpfer-Module mit Kunststoffkolben zum Einsatz kommen können, die auch eine interne Anschlagpufferabstützung ermöglichen.

Diese Aufgabe wird dadurch gelöst, dass der Abrollkolben aus zwei Teilen aus Kunststoff aufgebaut ist, nämlich aus
- einem Mantelbereich mit Bodenzone und Stützbereich, wobei die Bodenzone des Mantelbereichs eine Öffnung aufweist,
- einem Deckelbereich mit einem Deckel und einem Balgsitz, wobei der Deckelbereich ein ins Innere des Mantelbereichs weisendes, einstückig und stoffschlüssig mit dem Deckelbereich verbundenes Stützrohr aufweist,
- wobei Mantelbereich und Deckelbereich miteinander unlösbar und luftdicht verbunden sind und
- mit der Öffnung der Bodenzone über das obere Ende des Stoßdämpfers gestülpt sind, wobei
- das ins Innere des Mantelbereichs weisende Stützrohr um das Behälterrohr des Stoßdämpfers herumgreift und sich auf einem ersten Absatz des Stützringes am Behälterrohr des Stoßdämpfers abstützt und sich
- die Bodenzone über den Stützbereich auf einem zweiten Absatz des Stützringes am Behälterrohr des Stoßdämpfers abstützt und der Stützbereich mittels mindestens einer Dichtung gegen den Stützring abdichtbar ist.

Bei der erfindungsgemäßen Lösung übernehmen beide Kolbenteile Anteile an den Feder- und Pufferlasten, wodurch diese Anteile getrennt in den Stützring einleitbar sind. Die Belastungen des Werkstoffes sind dadurch besser verteilt, was vorteilhafterweise eine geringere Kriechneigung des Kunststoffs zur Folge hat.

Des Weiteren ist auch ein geringeres Gewicht des Abrollkolbens von Vorteil. Ein separater Korrosionsschutz ist ebenfalls nicht erforderlich.

Die Abdichtung des Mantelbereichs gegen den Stützring sorgt für Luftdichtheit. Eine Dichtheit zwischen Stützrohr und Mantel ist nicht erforderlich.

In einer Weiterbildung der Erfindung ist die Bodenzone des Mantelbereiches mittels Rippen gegen den Mantelbereich versteifbar.

In einer Weiterbildung der Erfindung ist der Deckelbereich mittels Rippen gegen das Stützrohr des Deckelbereiches versteifbar.

Eine Versteifung durch Rippen sorgt bei geringem Gewicht und Materialeinsatz für eine hohe Festigkeit der Bauteile.

In einer Weiterbildung der Erfindung sind Mantelbereich und Deckelbereich des Abrollkolbens durch Reibschweißen miteinander verbindbar.

Das Schweißen, insbesondere Reibschweißen, ist für eine luftdichte und unlösbare Verbindung der Kunststoffteile besonders vorteilhaft. Es wird kein Zusatzmaterial benötigt. Unerwünschte weitere Verbindungen, insbesondere von Versteifungsrippen mit den weiteren Bauteilen werden durch das erfindungsgemäße Luftfeder-Dämpfer-Modul vermieden.

Anhand der Zeichnung wird nachstehend ein Beispiel der Erfindung näher erläutert.

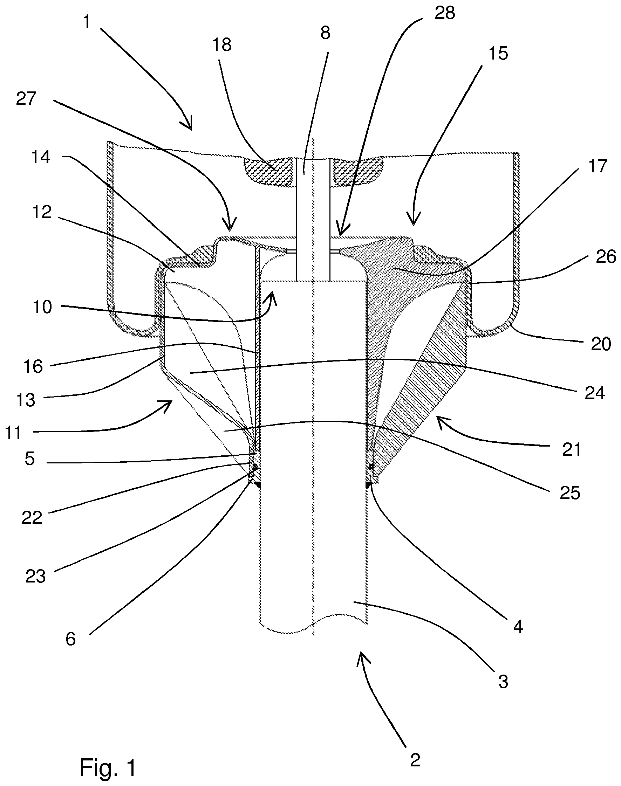

Die Fig. 1 zeigt einen Ausschnitt eines erfindungsgemäßen Luftfeder-Dämpfer-Moduls 1 in einem Teilschnitt.

Das Luftfeder-Dämpfer-Modul 1 weist einen Stoßdämpfer 2 mit einem Behälterrohr 3 auf, an dem ein Stützring 4 luftdicht angeschweißt ist. Der Stützring 4 weist einen ersten Absatz 5 und einen zweiten Absatz 6 auf. Der Stoßdämpfer 2 weist weiterhin eine Dämpferstange 8 auf. Stoßdämpfer 2 und Dämpferstange 8 sind hier nur teilweise dargestellt. Über das obere Ende 10 des Stoßdämpfers 2 ist ein Luftfeder-Abrollkolben 11 gestülpt, der aus einem schweißbaren Kunststoff gebildet ist. Der Abrollkolben 11 weist einen Deckelbereich 12 und einen Mantelbereich 13 auf. Der Deckelbereich 12 aus eigentlichem Deckel 14 und einem Konussitz 15 weist ein Stützrohr 16 auf, das stoffschlüssig und einstückig mit dem Deckel 14 verbunden ist. Deckel 14 und Stützrohr 16 sind mittels auf dem Umfang verteilter Rippen 17 gegeneinander versteift. Rippen 17 und Stützrohr 16 sind ebenfalls stoffschlüssig und einstückig mit Deckel 14 verbunden.

Das Stützrohr 16 greift um das Behälterrohr 3 herum und stützt sich gegen den ersten Absatz 5 des Stützrings 4 ab. Es ragt über das obere Ende 10 des Stoßdämpfers 2 hinaus und stützt dort den zentralen Bereich des Konussitzes 15. Ein hier nur teilweise gezeigter Anschlagpuffer 18 korrespondiert mit dem zentralen Bereich des Konussitzes 15. Im Falle eines Durchfederns des Luftfeder-Dämpfer-Moduls 1 sind die dabei auftretenden Kräfte hauptsächlich über das Stützrohr 16 in den Stützring 4 und damit in das Behälterrohr 3 des Stoßdämpfers 2 einleitbar. Eine untere Abstützung des Luftfeder-Dämpfer-Moduls gegen ein Fahrwerk ist hier nicht dargestellt.

Auf dem Konussitz 15, dem Deckel 14 und dem Mantelbereich 13 ist ein Abrollbalg 20 angeordnet, der auf dem Abrollkolben 11 abstützbar ist. Die Abstützung des Abrollbalges 20 an einer Karosserie oder anderen Teilen ist hier nicht gezeigt.

Die durch den Abrollbalg 20 in den Abrollkolben 11 einleitbaren Kräfte sind über den Mantelbereich 13 in den Stützring 4 einleitbar. Dazu weist der Mantelbereich 13 eine Bodenzone 21 auf, die konisch auf den Stoßdämpfer 2 gerichtet ist und in einem zylindrischen Stützbereich 22 auf dem zweiten Absatz 6 des Stützringes 4 abstützbar ist. Zwischen Stützbereich 22 und Stützring 4 ist eine O-Ring-Dichtung 23 angeordnet, durch die das Innere des Abrollkolbens 11 nach außen luftdicht abschließbar ist.

Zur Versteifung des Mantelbereiches 13 weist der Mantelbereich 13 auf dem Umfang verteilt innere Rippen 24 und äußere Rippen 25 auf, die mit der Bodenzone 21, dem Stützbereich 22 und dem Mantelbereich 13 stoffschlüssig und einstückig verbunden sind.

Deckelbereich 12 und Mantelbereich 13 sind mit nur einer Schweißnaht 26 luftdicht verbunden. Im Bereich des Stützringes 4 ist keine Verbindung zwischen Stützrohr 16 und Mantelbereich 13 vorgesehen. Dies erlaubt, den Deckelbereich 12 mit Rippen 14 und Stützrohr 16 sowie den Mantelbereich mit Bodenzone 21, Stützbereich 22 und Rippen 24 und 25 jeweils separat herzustellen. So sind bei der Herstellung des Abrollkolbens 11 keine Hinterschnitte zu berücksichtigen. Das Innere des Abrollkolbens 11 ist so dem Luftfedervolumen zur Verbesserung der Kennlinie zuschlagbar. Dazu dienen Verbindungsöffnungen 27 im Deckel 14, durch die Luft zwischen dem Innenvolumen des Abrollbalges und dem Inneren des Abrollkolbens 11 hin und her strömen kann. Weiterhin weist der Deckel 14 eine zentrische Öffnung als Durchlass für die Dämpferstange 8 auf, durch die ebenfalls Luft strömen kann.

Durch diese Anordnung sind Anteile der Federkräfte von beiden Kolbenteilen übernehmbar und getrennt voneinander in den Stützring 4 des Stoßdämpfers 2 einleitbar. Dies reduziert die Belastung der jeweiligen Abstützungen an den Absätzen 5 und 6, so dass die Kriechneigung der Bauteile minimiert ist.

### Bezugszeichenliste

### (Teil der Beschreibung)

- 1: Luftfeder-Dämpfer-Modul
- 2: Stoßdämpfer
- 3: Behälterrohr des Stoßdämpfers 2
- 4: Stützring
- 5: Erster Absatz des Stützrings 4
- 6: Zweiter Absatz des Stützrings 4
- 8: Dämpferstange
- 10: Oberes Ende des Stoßdämpfers 10
- 11: Abrollkolben
- 12: Deckelbereich des Abrollkolbens 11
- 13: Mantelbereich des Abrollkolbens 11
- 14: Deckel
- 15: Konussitz
- 16: Stützrohr
- 17: Rippen des Deckelbereichs 12
- 18: Anschlagpuffer
- 20: Abrollbalg
- 21: Bodenzone des Mantelbereichs 13
- 22: Stützbereich des Mantelbereichs 13
- 23: O-Ring-Dichtung
- 24: Innere Rippen des Mantelbereichs 13
- 25: Äußere Rippen des Mantelbereichs 13
- 26: Schweißnaht
- 27: Verbindungsöffnungen
- 28: Dämpferstangendurchlass

## Patentansprüche

1. Luftfeder-Dämpfer-Modul (1) umfassend
- einen Stoßdämpfer (2) mit einem Behälterrohr (3) mit einem vom oberen Ende (10) des Stoßdämpfers (2) beabstandeten, auf dem Behälterrohr (3) fixierten, als Ringflansch ausgebildeten Stützring (4),
- einem auf dem oberen Ende (10) des Stoßdämpfers (2) angeordneten Abrollkolben (11), der an seinem dem Stoßdämpfer (2) zugeordneten Ende eine zentrischen Öffnung aufweist und mit der Öffnung über das obere Ende (10) des Stoßdämpfers (2) gestülpt ist und sich über den Ringflansch (4) auf dem Behälterrohr (3) des Stoßdämpfers (2) abstützt,
- einem auf dem Abrollkolben (11) angeordneten und fixierten Luftfederbalg (20) und
- einem im Inneren des Luftfederbalgs (11) angeordneten Anschlagpuffer (18) aus elastomerem Werkstoff,
**dadurch gekennzeichnet, dass**
der Abrollkolben (11) aus zwei Teilen aus Kunststoff aufgebaut ist, nämlich aus
- einem Mantelbereich (13) mit Bodenzone (21) und Stützbereich (22), wobei die Bodenzone (21) des Mantelbereichs (13) eine Öffnung aufweist,
- einem Deckelbereich (12) mit einem Deckel (14) und einem Konussitz (15), wobei der Deckelbereich (12) ein ins Innere des Mantelbereichs (13) weisendes, einstückig und stoffschlüssig mit dem Deckelbereich (12) verbundenes Stützrohr (16) aufweist,
- wobei Mantelbereich (13) und Deckelbereich (12) miteinander unlösbar und luftdicht verbunden sind und
- mit der Öffnung der Bodenzone (21) über das obere Ende (10) des Stoßdämpfers (2) gestülpt sind, wobei
- das ins Innere des Mantelbereichs (13) weisende Stützrohr (16) um das Behälterrohr (3) des Stoßdämpfers (2) herumgreift und sich auf einem ersten Absatz (5) des Stützringes (4) am Behälterrohr (3) des Stoßdämpfers (2) abstützt und sich
- die Bodenzone (21) über den Stützbereich (22) auf einem zweiten Absatz (6) des Stützringes (4) am Behälterrohr (3) des Dämpfers (2) abstützt und der Stützbereich (22) mittels mindestens einer Dichtung (23) gegen den Stützring (4) abdichtbar ist.

2. Luftfeder-Dämpfer-Modul (1) nach Anspruch 1, **dadurch gekennzeichnet, dass** die Bodenzone (21) des Mantelbereiches (13) mittels Rippen (24, 25) gegen den Mantelbereich (13) versteifbar sind.

3. Luftfeder-Dämpfer-Modul (1) nach Anspruch 1, **dadurch gekennzeichnet, dass** der Deckelbereich (12) mittels Rippen (17) gegen das Stützrohr (16) des Deckelbereiches (12) versteifbar ist.

4. Luftfeder-Dämpfer-Modul (1) nach Anspruch 1, 2 oder 3, **dadurch gekennzeichnet, dass** Mantelbereich (13) und Deckelbereich (12) des Abrollkolbens (11) durch Reibschweißen miteinander verbindbar sind.

## Claims

1. Air spring-damper module (1), comprising
- a shock absorber (2) with a vessel tube (3) with a support ring (4) which is spaced apart from the upper end (10) of the shock absorber (2) and which is fixed to the vessel tube (3) and which is formed as a ring-shaped flange,
- a rolling piston (11) which is arranged on the upper end (10) of the shock absorber (2) and which, on its end assigned to the shock absorber (2), has a central opening and which is mounted with the opening over the upper end (10) of the shock absorber (2) and which is supported by means of the ring-shaped flange (4) on the vessel tube (3) of the shock absorber (2),
- an air spring bellows (20) which is arranged and fixed on the rolling piston (11), and
- a stop buffer (18) which is arranged in the interior of the air spring bellows (11) and which is composed of elastomer material,
**characterized in that**
the rolling piston (11) is constructed from two parts composed of plastic, specifically from
- a casing region (13) with base zone (21) and support region (22), wherein the base zone (21) of the casing region (13) has an opening,
- a cover region (12) with a cover (14) and with a conical seat (15), wherein the cover region (12) has a support tube (16) which points into the interior of the casing region (13) and which is connected in unipartite fashion and cohesively to the cover region (12),
- wherein casing region (13) and cover region (12) are connected non-detachably and in air-tight fashion to one another, and
- are mounted with the opening of the base zone (21) over the upper end (10) of the shock absorber (2), wherein
- the support tube (16), which points into the interior of the casing region (13), engages around the casing tube (3) of the shock absorber (2) and is supported on a first shoulder (5) of the support ring (4) on the vessel tube (3) of the shock absorber (2), and
- the base zone (21) is supported by means of the support region (22) on a second shoulder (6) of the support ring (4) on the vessel tube (3) of the damper (2), and the support region (22) can be sealed off against the support ring (4) by means of at least one seal (23).

2. Air spring-damper module (1) according to Claim 1, **characterized in that** the base zone (21) of the casing region (13) can be stiffened by means of ribs (24, 25) against the casing region (13).

3. Air spring-damper module (1) according to Claim 1, **characterized in that** the cover region (12) can be stiffened by means of ribs (17) against the support tube (16) of the cover region (12).

4. Air spring-damper module (1) according to Claim 1, 2 or 3, **characterized in that** casing region (13) and cover region (12) of the rolling piston (11) are connectable to one another by friction welding.

## Revendications

1. Module d'amortisseur par ressort pneumatique (1) comprenant
- un amortisseur de chocs (2) avec un tube de réservoir (3) avec une bague appui (4) espacée de l'extrémité supérieure (10) de l'amortisseur de chocs (2), fixée sur le tube de réservoir (3) et réalisée sous forme de bride annulaire (4),
- un piston roulant (11) disposé sur l'extrémité supérieure (10) de l'amortisseur de chocs (2), qui présente une ouverture centrée à son extrémité associée à l'amortisseur de chocs (2) et qui est engagé avec l'ouverture sur l'extrémité supérieure (10) de l'amortisseur de chocs (2) et qui s'appuie par la bride annulaire (4) sur le tube de réservoir (3) de l'amortisseur de chocs (2),
- un soufflet de ressort pneumatique (20) disposé et fixé sur le piston roulant (11), et
- un coussin de butée (18) en matériau élastomère disposé à l'intérieur du soufflet de ressort pneumatique (11),
**caractérisé en ce que** le piston roulant (11) est composé de deux parties en matière plastique, à savoir de
- une région d'enveloppe (13) avec une zone de fond (21) et une zone d'appui (22), dans lequel la zone de fond (21) de la région d'enveloppe (13) présente une ouverture,
- une région de couvercle (12) avec un couvercle (14) et un siège de cône (15), dans lequel la région de couvercle (12) présente un tube d'appui (16) tourné vers l'intérieur de la région d'enveloppe (13) et assemblé d'une pièce et matériellement à la région de couvercle (12),
- dans lequel la région d'enveloppe (13) et la région de couvercle (12) sont assemblées l'une à l'autre de façon inséparable et étanche à l'air et
- sont engagées avec l'ouverture de la zone de fond (21) sur l'extrémité supérieure (10) de l'amortisseur de chocs (2), dans lequel
- le tube d'appui (16) tourné vers l'intérieur de la région d'enveloppe (13) entoure le tube de réservoir (3) de l'amortisseur de chocs (2) et s'appuie sur un premier épaulement (5) de la bague d'appui (4) sur le tube de réservoir (3) de l'amortisseur de chocs (2) et
- la zone de fond (21) s'appuie par la zone d'appui (22) sur un deuxième épaulement (6) de la bague d'appui (4) sur le tube de réservoir (3) de l'amortisseur (2) et la zone d'appui (22) peut être rendue étanche par rapport à la bague d'appui (4) au moyen d'au moins un joint d'étanchéité (23).

2. Module d'amortisseur par ressort pneumatique (1) selon la revendication 1, **caractérisé en ce que** la zone de fond (21) de la région d'enveloppe (13) peut être renforcée contre la région d'enveloppe (13) au moyen de nervures (24, 25).

3. Module d'amortisseur par ressort pneumatique (1) selon la revendication 1, **caractérisé en ce que** la région de couvercle (12) peut être renforcée contre le tube d'appui (16) de la région de couvercle (12) au moyen de nervures (17) .

4. Module d'amortisseur par ressort pneumatique (1) selon la revendication 1, 2 ou 3, **caractérisé en ce que** la région d'enveloppe (13) et la région de couvercle (12) du piston roulant (11) peuvent être assemblées l'une à l'autre par soudage par friction.
